# EUROPEAN PATENT SPECIFICATION

(11) **EP 3 709 414 B1**
(45) Date of publication and mention of the grant of the patent: **29.10.2025**
(21) Application number: 20161659.6
(22) Date of filing: 06.03.2020
(51) Int. Cl.: H01M 8/10, B01D 63/02, B01D 69/08, B01D 71/36, H01M 8/04119, C01B 3/06, B01D 69/12

(54) **WATER EXCHANGER FOR A FUEL CELL BASED POWER GENERATOR**
WASSERAUSTAUSCHER FÜR EINEN BRENNSTOFFZELLENBASIERTEN STROMGENERATOR
ÉCHANGEUR D'EAU POUR UN GÉNÉRATEUR DE PUISSANCE BASÉ SUR DES PILES À COMBUSTIBLE

(30) Priority: 14.03.2019 US 201916354041
(43) Date of publication of application: 16.09.2020
(73) Proprietor: Honeywell International Inc., Charlotte, NC 28202 (US)
(72) Inventor: EICKHOFF, Steven J., Morris Plains, NJ New Jersey 07950 (US); KLEIN, Jeffrey Michael, Morris Plains, NJ New Jersey 07950 (US); KOENEMAN, Paul Bryant, Morris Plains, NJ New Jersey 07950 (US)
(74) Representative: Ingrassia, Fisher & Lorenz UK Ltd.

(56) References cited:
- EP-A1- 3 379 632
- US-A- 5 565 166
- US-A- 6 149 810
- US-A1- 2006 099 363
- US-A1- 2010 190 093
- US-A1- 2013 043 178
- US-B1- 6 403 249
- US-B2- 8 398 858

## Description

### TECHNICAL FIELD

The present disclosure relates generally to a water exchanger for a fuel cell based power generator, and a method of processing the same.

### BACKGROUND

The run time of unmanned air systems (UAS), sometimes referred to as drones, is limited by their power sources. State of the art UAS use light-weight lithium ion/polymer batteries with specific energies that range from ~200-300 Wh/kg, enabling flight times on the order of 20-60 minutes. For emerging applications including infrastructure inspection (e.g. roads, bridges, power lines, rail, pipelines, etc.) and package delivery, it may be desired to have greater flight times on battery charge, among other suitable applications. In some instances, greater than six-hour flight times are desired in order for such UAS to be commercially viable.

Existing obstacles include efficient energy storage and utilization. Proton exchange membrane (PEM) fuel cells for man-portable power and micro air vehicles require light-weight, small-size, and high-rate hydrogen sources. Commercially available hydrogen sources such as metal hydrides, compressed hydrogen in cylinders, or catalytic waterborohydride hydrogen generators are capable of high rate hydrogen generation, but are heavy and bulky. Further, state of the art gas-to-gas water exchangers (e.g., water exchangers used to exchange water between flowing gas streams without mixing) are too heavy, and have pressure drops that are too high, for use in airborne applications such as UAS.

Documents cited during prosecution include US 2010/190093 A1; EP 3 379 632 A1; US 8 398 858 B2; and US 5 565 166 A. US 2010/190093 A1 and EP 3 379 632 A1 each disclose a hollow fibre membrane module which is a humidifier for fuel cells i.e. a water exchanger. US 8 398 858 B2 discloses lamination of membranes around parallel wires or tubes which are then removed to form sheets of aligned hollow fibres which are laminated together along their entire length. US 5 565 166 A discloses arrays of hollow fibres formed by laminating two layers of a microporous, oriented PTFE (polytetrafluoroethylene) membrane.

### BRIEF DESCRIPTION OF THE DRAWINGS

Fig. 1 is a schematic diagram of a fuel cell based power generator according to an embodiment of the present disclosure.
Figs. 2A and 2B illustrate various perspective views of a water exchanger for a fuel cell based power generator according to an embodiment of the present disclosure.
Fig. 3 illustrates an angled cross-sectional view of a hollow tubular structure of a water exchanger according to example embodiments.
Figs. 4A and 4B illustrate process steps associated with forming a water exchanger for a fuel cell based power generator according to an embodiment of the present invention.

### DETAILED DESCRIPTION

Aspects and preferred embodiments of the invention are defined in the appended claims. A water exchanger for a fuel cell based power generator is described herein. For example, an embodiment includes a plurality of hollow tubular structures, wherein each respective hollow tubular structure comprises a membrane that is selectively permeable to water vapor over other gases (e.g. air, hydrogen, oxygen, nitrogen). The selective membrane of the humidifier may be made from a broad variety of compositions, including (but not limited to) commercially available membranes based on: perfluorosulfonic acid (e.g. Nafion^{®}, Aquivion^{®}, Gore-Select^{®}, etc.); polybenzimidazole (e.g. fumapem^{®} AM); sulfonated polysulfone (e.g. fumapem^{®} SX); sulfonated polyarylene (e.g. Asahi CMV); poly(styrene-co-butadiene) (e.g. Asahi AMV); poly(styrene-codivinylbenzene) (e.g. NEOSEPTA); silicone (e.g. PermSelect^{®}). The membranes may also be made from a variety of proprietary or experimental chemistries under development for application as cation and anion exchange membranes.

A water exchanger in accordance with embodiments of the present disclosure is a light-weight, low pressure-drop water exchanger for a fuel cell based power system that is suitable for use in unmanned air systems (UAS) such as drones. For example, fuel cell based power systems incorporating a light-weight, low-pressure drop water exchanger in accordance with embodiments of the present disclosure can provide the increased UAS endurance (e.g., flight time) needed for emerging applications including infrastructure inspection (e.g. roads, bridges, power lines, rail, pipelines, etc.) and package delivery that is not available with state of the art UAS that use lithium ion/polymer batteries and provide flight times on the order of 20-60 minutes.

For example, a water exchanger in accordance with the present disclosure can have a reduced (e.g., lighter) weight as compared to state of the art gas-to-gas water exchangers, which can allow the fuel cell of the UAS to carry more fuel and thereby enhance the endurance of the UAS. Further, a water exchanger in accordance with the present disclosure can have a reduced (e.g., lower) pressure drop as compared to state of the art gas-to-gas water exchangers, which can allow for the use of light-weight blowers with reduced parasitic power consumption, which can further enhance the endurance of the UAS.

In the following description, reference is made to the accompanying drawings that form a part hereof. The drawings show by way of illustration specific embodiments which may be practiced.

These embodiments are described in sufficient detail to enable those of ordinary skill in the art to practice one or more embodiments of this disclosure. It is to be understood that other embodiments may be utilized, and that mechanical, electrical, and/or process changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

The figures herein follow a numbering convention in which the first digit or digits correspond to the drawing Fig. number and the remaining digits identify an element or component in the drawing

As used herein, "a" or "a number of" something can refer to one or more such things, while "a plurality of" something can refer to more than one such thing. For example, "a number of devices" can refer to one or more devices, while "a plurality of devices" can refer to more than one device.

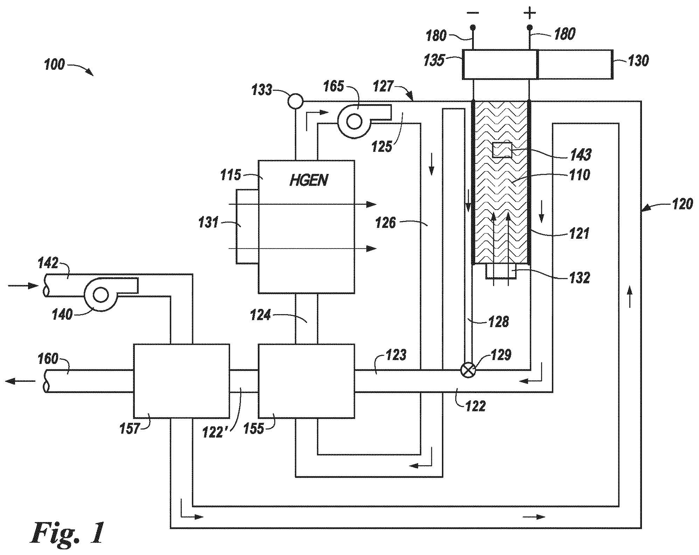

Fig. 1 is a schematic diagram of a fuel cell based power generator 100 in accordance with an embodiment of the present disclosure. In the embodiment shown in Fig. 1, power generator 100 includes a fuel cell 110 and a hydrogen generator 115.

As used herein, the term "fuel cell" can, for example, refer to an electrochemical cell that converts chemical energy from a fuel into electricity through an electrochemical reaction. For example, hydrogen can be provided to fuel cell 110 such that hydrogen is consumed in an electrochemical reaction to produce electricity, as is further described herein. An ambient air path 120 is configured to run ambient air past a cathode side of the fuel cell 110, via ambient air path portion 122. The ambient air path 120 is part of a cathode loop, which includes all the paths that ambient air circulates through, including interiors of components the ambient air passes through.

A reaction in the fuel cell 110 generates electrical power and adds water as a by-product to the ambient air path portion 122. This water is then provided to the hydrogen generator 115, which contains one or more fuels that release hydrogen responsive to exposure to water, which may be in vapor form. As used herein, the term "hydrogen generator" refers to a device which contains one or more fuels that release hydrogen responsive to exposure to water, which may be in the form of humidity.

The hydrogen generator 115 provides the released hydrogen to a recirculating hydrogen path 125, which splits into two parts at junction 127. The two parts include a primary path 126 and a secondary path 128. The primary path 126 recirculates released hydrogen back to hydrogen generator 115. The secondary path 128 runs past the anode side of the fuel cell 110 to provide the hydrogen to the fuel cell 110. The secondary path 128 is part of an anode loop, which includes all the paths that hydrogen recirculates through, including interiors of components the ambient air passes through.

Hydrogen from the recirculating hydrogen path 125 reacts with oxygen from the ambient air path 120 in fuel cell 110, producing electrical power, water vapor, and heat as reaction byproducts. The byproducts on the cathode side of the fuel cell 110 are removed from the fuel cell by the air flowing within ambient airflow path 120. Leftover hydrogen and any inert gases that leak/permeate into the anode loop over time continue through the recirculating hydrogen path 125.

In some embodiments, a cooling mechanism 132, such as a fan or liquid cooling loop, can be used with the fuel cell portion system to assist in the removal of heat. In such an embodiment, most of the heat generated in the fuel cell is removed via this liquid cooling loop and rejected to ambient via a heat exchanger and/or fan, represented in block form as part of the cooling mechanism 132.

In some embodiments, as shown in Fig. 1, the secondary path 128 can include a purge valve 129 that purges inert gases (e.g. nitrogen, water vapor) that build up over time in the anode loop into an ambient airflow path portion 123 of the ambient airflow path 120. These gases are purged periodically by actuating the purge valve 129, for example, based on predetermined timing or a sensed parameter like fuel cell voltage or hydrogen concentration. In some embodiments, the valve may be slightly open most of the time to continuously remove the inert gases, with most of the hydrogen flowing to and being consumed by the anode of the fuel cell.

In some embodiments, the fuel cells provide current to a controller 135 that charges a Li-ion battery or batteries 130. The controller 135 also provides power to a load, such as the UAS. In some implementations, the batteries can provide the ability to supply higher and more dynamic levels of power than simply utilizing the fuel cells directly, which can be slower to respond and not normally be able to provide high levels of power that may be required for operation of the UAS in a desired manner, such as accelerating sufficiently while carrying a load.

Controller 135 may comprise a microprocessor, circuitry, and other electronics to receive data representative of sensed pressure, temperature, and other parameters and utilize control algorithms, such as proportional/integral/derivative (PID) or other type of algorithms to control mechanisms to modify the parameters to meet one or more different setpoints. Controller 135 may also be referred to as a power management module or controller 135. In some embodiments, control may be based on proportional controller.

In some embodiments, the fuel cell based power generator 100 has a system configuration (implemented in a X590 form factor battery package in one embodiment) and its operating principle is schematically depicted in Fig. 1. Hydrogen generator 115, in various embodiments, is a replaceable and disposable "fuel-cartridge" unit that generates H₂ for a H₂/oxygen proton exchange membrane (PEM) fuel cell 110, and a permanent unit that , in some embodiments, includes PEM fuel cell 110, Li-ion recharge battery 130 as an output stage to interface with an external load, and the controller 135 that controls electronic and fluidic control circuits (e.g., controlling one or more fluid movement apparatuses) to dynamically sense and optimize the power generator 100 under varying load and environmental conditions.

Ambient air serves as the fuel cell power generator 100 oxygen source, carrier gas for water vapor, and coolant gas for the fuel cell stack and H₂ generator. A first fluid movement apparatus (e.g., a fan) 140 draws in fresh air from ambient via an inlet 142 and circulates it over the cathode side of the fuel cell stack at 121 via the ambient air path or passage 120.

Since the fuel cell 110 reaction is exothermic, the temperature of the fuel cell 110 increases and may be measured by a first temperature sensor 143 associated with fuel cell 110, which is positioned to measure the temperature of the fuel cell 110. The temperature sensor is shown in block form and may be placed anywhere such that it is thermally coupled to the fuel cell 110 to provide a reliable measurement of the temperature of the fuel cell 110. Sensor 143 may comprise multiple temperature sensors. In one embodiment, one of the temperature sensors is coupled to provide data representative of the temperature proximate the anode, and another coupled to provide data representative of the temperature proximate the cathode of the fuel cell 110. The temperature data is provided to the controller 135 for use in controlling to one or more setpoints. A fuel cell set point temperature of the fuel cell 110 is indicated as 60°C, which has been found to be a temperature at which the fuel cell 110 functions most efficiently.

In further embodiments, the set point may vary between 40°C and 80°C, and may vary further depending on the configuration and specific materials utilized in fuel cell 110 and system 100. Different optimal set points for the fuel cell may be determined experimentally for different fuel cells and may be found to be outside the range specified above.

The fuel cell temperature is modified via cooling mechanism 132 (e.g., liquid cooling loop with liquid pump, heat exchanger, and fan) under control of controller 135 that receives temperature information from first temperature sensor 143. The first temperature sensor 143 may include separate temperature sensors to sense temperatures of both the anode side and cathode side of the fuel cell 110.

In some embodiments, the fuel cell temperature and hydrogen generator temperature can be controlled separately. Separately controllable fans and or fluid pumps may be used for such independent control. The power management module may control various pressures and temperatures via the various mechanisms using one or more of PID control, proportional control, or other type of algorithm. Temperatures may be controlled within desired temperature ranges defined by upper and lower temperature thresholds.

While the fuel cell 110 is producing electrical power as well as heat, ambient air flowing within path 120 delivers oxygen to the fuel cell 110 cathode and removes water vapor generated by the reaction in the fuel cell 110. The hot, humid air continues down path 120 to a first water exchanger 155. The water exchanger 155 extracts water from the hot, humid ambient air and passes the extracted water into the hydrogen flow path 124 (anode loop). The hot, somewhat drier air continues down path 122' to a second water exchanger 157, where heat and water is passed into the cathode loop. This heat and water raise the temperature and humidity of the incoming ambient air, which improves fuel cell performance. After exiting the second water exchanger, the warm dry air is exhausted to the ambient at 160.

Water exchanger 155, and the operation of water exchanger 155, is further described herein. For instance, water exchanger 155 can be a light-weight, low pressure-drop water exchanger, as will be further described herein.

The extracted water from the ambient air path is then provided to the recirculating hydrogen path to create humid hydrogen (H₂) at 124. This humid H₂ then flows to the hydrogen generator where water therein interacts with the fuel to generate additional hydrogen.

The hydrogen generator 115 also has a set point temperature at which it operates most efficiently. The temperature may be measured by sensing the temperature of the hydrogen as it exits the hydrogen generator 115 as represented by the position of a sensor 133, which may be a temperature sensor and also may include a pressure sensor. The hydrogen generator experiences an exothermic reaction and has an optimal operating set point is shown as 80°C, but may vary from 60°C - 100°C or outside the range depending on the composition of the hydrogen generator used.

The hydrogen generator temperature may be controlled by varying the speed of one or more cooling mechanisms 131 positioned to remove heat from the hydrogen generator. The cooling mechanism may be positioned on the outside of the hydrogen generator or positioned proximate the hydrogen generator to effect cooling of the hydrogen generator. For example, in some embodiments, the hydrogen generator temperature is modified by an external cooling mechanism (e.g., a fan, blower, etc.) positioned, for instance, on the surface of the generator. The cooling mechanism may be controlled via the controller 135 using PID or other control algorithms, such as proportional control. The hydrogen generator could also be cooled using a liquid cooling loop and associated liquid pump, heat exchanger, and fan.

The humid hydrogen 124 flows into the hydrogen generator 115, where the water reacts with the fuel and generates hydrogen. The now dry hydrogen leaves the hydrogen generator and flows into blower 165, which raises the pressure.

The higher pressure dry hydrogen then progresses down the path 125 to a split 127 where some of the dry H₂ enters a primary path 126 and some dry H₂ enters a secondary path 128.

The secondary path 128 is located adjacent the anode side of the fuel cell to provide hydrogen to the fuel cell, while the primary path can be located further away from the fuel cell. This configuration allows for a large amount of hydrogen to recirculate continuously through the system in a hydrogen loop (to efficiently extract the water from the cathode via the ambient air path water exchanger 155) while flowing a smaller amount of hydrogen to the fuel cell via secondary path 128.

The secondary path 128 can be a dead end with a purge valve 129 therein that allows inert gasses (e.g., nitrogen, water vapor) to be purged from the anode stream by actuating the valve periodically (e.g., based timing or a sensed parameter such as fuel cell voltage or oxygen concentration). Because some water vapor is included in the inert gas, it is desirable to purge the inert gas into the cathode stream 122 upstream of the primary water exchanger 155, so that the water vapor can be recovered via water exchangers 155 and 157.

The anode loop pressure as measured by sensor 133 is controlled by varying the blower 165 fan speed, which controls the amount of water recovered from through the water exchanger 155, and hydrogen generated in the hydrogen generator 115. Higher blower fan speeds lead to higher anode loop pressures, for example, pressures slightly above ambient pressure by 1-10 psig. (1psig=6.89 kPa)

Steady state operation of the fuel cell based power generator can be achieved by:
1) Controlling cathode blower speed based on power demand from load;
2) Controlling anode blower speed based on anode loop pressure (e.g., measured via pressure sensor 133);
3) Controlling fuel cell cooling based on fuel cell temperature (e.g., via cooling mechanism 132); and/or
4) Controlling pump/fan speed control for cooling mechanism 131 (e.g., fan, blower, cooling loop, etc.) associated with the hydrogen generator (e.g., mounted on the outside of the hydrogen generator) based on hydrogen generator temperature.

In some embodiments, as air passes by the fuel cell stack 110 from the ambient air path 120 and the secondary path 128 of the recirculating hydrogen path 125, oxygen and hydrogen are consumed by the fuel cell 110, and water vapor and waste heat are removed by the ambient air at fuel cell cathode 121.

The power generated in the fuel cell stack may be fed to controller 135 which may include power management circuitry. The circuitry conditions the power and provides it as electricity to a load as indicated by contacts 180.

One or more sensors may measure, in addition to the temperature sensor previously described, humidity, and/or pressure throughout the system 100. Data provided by the sensors, as well as the electrical load and/or charge state of the charge storage device 130 are used by the control controller 135 to determine and set the various fluid movement apparatus speeds to control the temperature of the elements to corresponding set points. Power management circuitry 135 can include a controller, as is further described herein.

Fuel consumption may also be monitored via controller 135 or other power monitoring device, and the remaining capacity may be displayed via a display on the fuel cell power generator packaging as driven by controller 135 in various embodiments. In some embodiments, greater than 95% fuel utilization may be achieved through an optimized LAH fuel formation (e.g., through one or more of porosity, particle size/distribution, rate enhancing additives, or other formulation characteristics).

In some embodiments, the LAH-water reaction generates heat (~150kJ/mol LAH, exothermic) leading to a rise in temperature in the fuel. The temperature may be monitored along with controlling the speed of the hydrogen generator cooling fan to maintain the temperature at a desired set point for optimal operation.

Electrochemical system power performance can substantially degrade at low temperatures (-40°C) due to slower reaction kinetics and lower electrolyte conductivity. The hybrid fuel cell may avoid freezing problems by: 1) using water in vapor form, 2) adjusting airflow to prevent water vapor condensation, 3) using heat generated by the fuel cell stack and H₂ generator to regulate their temperatures, 4) Insulating certain system components, and 5) using electrically power heaters to control the temperature of certain system components. In some embodiments, noryl plastic packaging (e.g., consistent with the type used on the Saft BA5590) may be used. Many different types of plastics and/or other materials (e.g., that provide low weight yet sufficient tolerance to the operating parameters and environmental conditions of the generator) may be used.

Hydrogen generator 115 in some embodiments is a high-rate hydrogen generator suitable for man-portable power and micro air vehicle applications that provides four to five times the hydrogen of commercially available hydrogen sources of the same size and weight. Many different hydrogen producing fuels, such as LAH may be used. In further embodiments, the hydrogen producing fuel may, for example, include AlH₃, LiAlH₄, NaAlH₄, KAlH₄, MgAlH₄, CaH₂, LiBH₄, NaBH₄, LiH, MgH₂, Li₃Al₂, CaAl₂H₈, Mg₂Al₃, alkali metals, alkaline earth metals, alkali metal silicides, or combinations of one or more thereof.

The term "about" as used herein can allow for a degree of variability in a value or range, for example, within 10%, within 5%, or within 1% of a stated value or of a stated limit of a range, and includes the exact stated value or range.

The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%.

### Hydrogen-generating composition for a fuel cell

In various embodiments, the present disclosure provides a hydrogen-generating composition for a fuel cell.

The hydrogen-generating composition reacts with water to generate hydrogen gas. The phase of the water contacted with the hydrogen-generating composition to generate the hydrogen gas can be any suitable phase, such as liquid water (e.g., in a pure state, diluted state, or such as having one or more compounds or solvents dissolved therein) or gaseous water (e.g., water vapor, at any suitable concentration). The generated hydrogen gas can be used as the fuel for a hydrogen-consuming fuel cell.

The hydrogen-generating composition can be in any suitable form. The hydrogen-generating composition can, for example, be in the form of a loose powder or a compressed powder. The hydrogen-generating composition can also be in the form of grains or pellets (e.g., a powder or grains compressed into pellets). The hydrogen- generating composition can have any suitable density, such as, for example, about 0.5 g/cm³ to about 1.5 g/cm³, or about 0.5 g/cm³ or less, or less than, equal to, or greater than about 0.6 g/cm³ 0.7, 0.8, 0.9, 1, 1.1, 1.2, 1.3, 1.4 g/cm³, or about 1.5 g/cm³ or more.

In some embodiments, the hydrogen-generating composition is substantially free of elemental metals. In some embodiments, the hydrogen- generating composition can be substantially free of elemental aluminum.

### Hydride

The hydrogen-generating composition may include one or more hydrides. The one or more hydrides can form any suitable proportion of the hydrogen-generating composition, such as about 50 wt% to about 99.999 wt%, about 70 wt% to about 99.9 wt%, about 70 wt% to about 90 wt%, or about 50 wt% or less, or less than, equal to, or greater than about 52 wt%, 54, 56, 58, 60, 62, 64, 66, 68, 70, 71, 72, 73, 74, 75, 76, 77, 78, 79, 80, 81, 82, 83, 84, 85, 86, 87, 88, 89, 90, 92, 94, 96, 98, 99, 99.9, 99.99, or about 99.999 wt% or more.

The hydride can be any suitable hydride, such that the hydrogen- generating composition can be used as described herein. The hydride can be a compound in which one or more hydrogen centers (e.g., one or more hydrogen atoms, or a group that includes one or more hydrogen atoms) having nucleophilic, reducing, or basic properties.

The hydrogen atom in the hydride can be bonded to a more electropositive element or group. For example, the hydrogen can be chosen from an ionic hydride (e.g., a hydrogen atom bound to an electropositive metal, such as an alkali metal or alkaline earth metal), a covalent hydride (e.g., compounds including covalently bonded hydrogen and that react as hydride, such that the hydrogen atom or hydrogen center has nucleophilic properties, reducing properties, basic properties, or a combination thereof), a metallic hydride (e.g., interstitial hydrides that exist within metals or alloys), a transition metal hydride complex (e.g., including compounds that can be classified as covalent hydrides or interstitial hydrides, such as including a single bond between the hydrogen atom and a transition metal), or a combination thereof.

The hydride can be chosen from magnesium hydride (MgH₂), lithium hydride (LiH), aluminum hydride (AlH₃), calcium hydride (CaH₂), sodium aluminum hydride (NaAlH₄), sodium borohydride (NaBH₄), lithium aluminum hydride (LiAlH₄), ammonia borane (H₃NBH₃), diborane (B₂H₆), palladium hydride, LaNi₅H₆, TiFeH₂, and a combination thereof. The hydride can be chosen from lithium aluminum hydride (LiAlH₄), calcium hydride (CaH₂), sodium aluminum hydride (NaAlH₄), aluminum hydride (AlH₃), and a combination thereof. The hydride can be lithium aluminum hydride (LiAlH₄).

In some embodiments, the hydrogen-generating composition only includes a single hydride and is substantially free of other hydrides. In some embodiments, the hydrogen-generating composition only includes one or more hydrides chosen from lithium aluminum hydride (LiAlH₄), calcium hydride (CaH₂), sodium aluminum hydride (NaAlH₄), and aluminum hydride (AlH₃), and is substantially free of other hydrides.

In various embodiments, the hydrogen-generating composition only includes the hydride lithium aluminum hydride (LiAlH₄), and is substantially free of other hydrides. In some embodiments, the hydrogen-generating composition can be substantially free of simple hydrides that are a metal atom directly bound to a hydrogen atom. In some embodiments, the hydrogen-generating composition can be substantially free of lithium hydride and beryllium hydride.

In various embodiments, the hydrogen-generating composition can be substantially free of hydrides of aluminum (Al), arsenic (As), boron (B), barium (Ba), beryllium (Be), calcium (Ca), cadmium (Cd), cerium (Ce), cesium (Cs), copper (Cu), europium (Eu), iron (Fe), gallium (Ga), gadolinium (Gd), germanium (Ge), hafnium (Hf), mercury (Hg), indium (In), potassium (K), lanthanum (La), lithium (Li), magnesium (Mg), manganese (Mn), sodium (Na), neodymium (Nd), nickel (Ni), lead (Pb), praseodymium (Pr), rubidium (Rb), antimony (Sb), scandium (Sc), selenium (Se), silicon (Si), samarium (Sm), tin (Sn), strontium (Sr), thorium (Th), titanium (Ti), thallium (Tl), vanadium (V), tungsten (W), yttrium (Y), ytterbium (Yb), zinc (Zn), zirconium (Zr), hydrides of organic cations including (CH₃) methyl groups, or a combination thereof. In some embodiments, the hydrogen-generating composition can be substantially free of one or more of lithium hydride (LiH), sodium hydride (NaH), potassium hydride (KH), magnesium hydride (MgH₂), calcium hydride (CaH₂), lithium aluminum hydride (LiAlH₄), sodium borohydride (NaBH₄), lithium borohydride (LiBH₄), magnesium borohydride Mg(BH₄)₂, sodium aluminum hydride (NaAlH₄), or mixtures thereof.

In various embodiments, the hydrogen-generating composition includes a metal hydride (e.g., an interstitial intermetallic hydride). Metal hydrides can reversibly absorb hydrogen into their metal lattice. The metal hydride can be any suitable metal hydride.

The metal hydride can, for example, be LaNi₅, LaNi_{4.6}Mn_{0.4}, MnNi_{3.5}CO_{0.7}Al_{0.8}, MnNi_{4.2}CO_{0.2}Mn_{0.3}Al_{0.3}, TiFe_{0.8}Ni_{0.2}, CaNi₅, (V_{0.9}Ti_{0.1})_{0.95}Fe_{0.05}, (V_{0.9}Ti_{0.1})_{0.95}Fe_{0.05}, LaNi_{4.7}Al_{0.3}, LaNi₅₋ₓAlₓ wherein x is about 0 to about 1, or any combination thereof. The metal hydride can be LaNi₅₋ₓAlₓ wherein x is about 0 to about 1 (e.g., from LaNi₅ to LaNi₄Al). The metal hydride can form any suitable proportion of the hydrogen-generating composition, such as about 10 wt% to about 99.999 wt%, or about 20 wt% to about 99.5 wt%, or about 10 wt% or less, or less than, equal to, or greater than about 15 wt%, 20, 21, 22, 23, 24, 25, 26, 27, 28, 29, 30, 35, 40, 45, 50, 55, 60, 65, 70, 75, 80, 85, 90, 91, 92, 93, 94, 95, 96, 97, 98, 99, 99.5, 99.9, 99.99, or about 99.999 wt% or more. Any metal hydride that is described in U.S. Patent No. 8,172,928, incorporated by reference herein in its entirety, can be included in the present hydrogen-generating composition.

The hydrogen-generating composition can include both a metal hydride (e.g., an interstitial intermetallic hydride, such as LaNi₅₋ₓAlₓ wherein x is about 0 to about 1), and a chemical hydride (e.g., an ionic hydride or a covalent hydride, such as magnesium hydride (MgH₂), lithium hydride (LiH), aluminum hydride (AlH₃), calcium hydride (CaH₂), sodium aluminum hydride (NaAlH₄), sodium borohydride (NaBH₄), lithium aluminum hydride (LiAlH₄), ammonia borane (H₃NBH₃), diborane (B₂H₆), palladium hydride, LaNi₅H₆, TiFeH₂, and a combination thereof).

### Metal oxide

In various embodiments, the hydrogen-generating composition can include one or more metal oxides. In some embodiments, the hydrogen-generating composition can be free of metal oxides. The one or more metal oxides can form any suitable proportion of the hydrogen-generating composition, such as about 0.001 wt% to about 20 wt% of the hydrogen-generating composition, about 1 wt% to about 10 wt%, or about 0.001 wt% or less, or less than, equal to, or greater than about 0.01, 0.1, 1, 2, 3, 4, 5, 6, 7, 8, 9, 10, 12, 14, 16, 18, or about 20 wt% or more.

The metal oxide can be any suitable metal oxide, such that the hydrogen-generating composition can be used as described herein. The metal oxide can be zirconium (IV) oxide, hafnium (IV) oxide, titanium (IV) oxide, or a combination thereof. The metal oxide can be titanium (IV) oxide.

The hydrogen-consuming fuel cell can include an anode, a cathode, and an electrically-insulating ion-conducting electrolyte (e.g., a membrane, such as a proton exchange membrane, or PEM) separating the anode and cathode, wherein at least one of the anode or cathode undergoes a chemical reaction that consumes hydrogen and generates an electrical potential across the electrodes. In some embodiments, the cathode of the fuel cell consumes hydrogen gas and generates electrons and hydrogen ions.

The hydrogen ions can travel across the electrolyte to the cathode, while the electrons can travel to the cathode via an electrical circuit connecting the anode to the cathode. At the cathode, the hydrogen ions can react with oxygen gas and the electrons produced by the anode to form water.

The water vapor reacts with the chemical hydride fuel in the hydrogen generator, and generates hydrogen in an exothermic reaction. The hydrogen is carried to a PEM fuel cell as illustrated in FIG. 1 to generate electrical power.

The hydrogen generator 115 may be contained in a replaceable and disposable (recyclable) cartridge such as a container. The hydrogen generator 115 may be cylindrical in geometry in some embodiments.

During the electrochemical reaction in fuel cell 110 that produces energy, water vapor, and heat as reaction byproducts, the ambient air within the path 120 is heated and water is added resulting in hot, wet air travelling through the path at 122.

The water exchanger 155 extracts water from the hot, wet air within ambient air path at 123, and exhausts hot, dry air outside the power generator 100 at exhaust 160. The set point temperature, which in some embodiments is 60°C, may, for example, vary from 40°C to 80°C in some embodiments, or outside that range depending on the type of water exchanger utilized as first water exchanger 155. The extracted water from the ambient air path 120 is provided to the anode loop 125 to release additional hydrogen at 124 from hydrogen generator 115. Temperature sensors in the anode and cathode loops may be used to determine and control the water exchanger 155 temperature. One or more sensors may be positioned proximate outlets of the water exchanger to provide a temperature data to the controller 135.

As shown in the embodiment of Fig. 1, the power generator 100 can also include one or more other water exchangers, such as second water exchanger 157. Second water exchanger 157 transfers heat and water vapor to the incoming air at inlet 142, which improves fuel cell performance. In some embodiments a single water exchanger which combines the functions of the first and second water exchangers (e.g. has separate flow paths for the anode and cathode loops) is used to save weight.

Once the released hydrogen travels from hydrogen generator 115 through anode loop 125, it progresses to junction 127 where some of the hydrogen enters a primary path 126 to be recirculated and some hydrogen enters a secondary path 128 to be provided for the electrochemical reaction in fuel cell 110.

As described above, the electrochemical reaction in fuel cell 110 can produce energy. In some embodiments, the fuel cell 110 charges a charge storage device 130. The charge storage device can be a rechargeable battery such as a lithium-ion battery, a capacitor, or any other suitable charge storage device. In other words, charge storage device 130 is coupled to power generator 100 such that charge storage device 130 receives electricity generated by fuel cell 110.

In some implementations, the charge storage device 130 can provide the ability to supply higher and more dynamic levels of power than simply utilizing the fuel cell 110 directly, which can be slower to respond and not normally be able to provide high levels of power that may be required for operation of a UAS in a desired manner, such as accelerating sufficiently while carrying a load. In the embodiment of Fig. 1, power generated by the fuel cell 110 can be provided for storage in one or more charge storage devices 130, and/or provided directly to the load from the controller 135.

As illustrated in Fig. 1, power generator 100 can include controller 135. Controller 135 can provide inputs to power generator 100 such that power generator 100 can run optimally, producing power to be stored in charge storage device 130 for use by a UAS, for example. For example, controller/power management electronics can manage flow of power from the fuel cell to the load, and/or control other aspects of power generation (e.g., regulation of temperatures, pressures, flow rates, etc.)

Controller 135 can provide inputs to power generator 100 in various ways such that power generator 100 can optimally generate power, as are further described herein. For example, in some embodiments, controller 135 can provide inputs to power generator 100 based on a pressure in anode loop 125. In some embodiments, controller 135 can provide inputs to power generator 100 based on a current draw by the load (e.g., a UAS) from charge storage device 130. However, embodiments of the present disclosure are not limited to control schemes for power generator 100. For example, controller 135 can provide inputs for other system controls. For instance, controller 135 can control the temperature of the fuel cell/hydrogen generator, pressure in the anode loop, flow in anode and cathode loops, state of charge of charge storage device, anticipated changes in load from the device the power source is powering, etc.

As described above, in some examples controller 135 can provide inputs to power generator 100 based on a pressure in anode loop 125. Controller 135 can receive a pressure reading in anode loop 125, where the pressure in anode loop 125 is based on the blower fan speed of blower 165.

The pressure reading received by controller 135 can be the pressure in anode loop 126. The pressure in anode loop 126 can be the absolute pressure or the gauge pressure relative to the local ambient pressure. For example, a sensor included in anode loop 125 can determine the pressure in anode loop 125 and transmit the pressure to controller 135. The pressure in anode loop 126 can allow controller 135 to determine a speed of blower 165 in order to allow hydrogen generator 115, fuel cell 110, first water exchanger 155 and/or second water exchanger 157 to operate optimally, as is further described herein. That is, the speed of blower 165 can affect operating parameters of the hydrogen generator 115, fuel cell 110, first water exchanger 155 and/or second water exchanger 157 according to the operational scheme of power generator 100 as described above.

Controller 135 can determine whether the pressure in anode loop 125 exceeds a threshold pressure. As an example, the sensor in anode loop 125 can determine the pressure in anode loop 125 is 8 pounds per square inch (PSI). Controller 135 can compare the received pressure to a threshold pressure to determine whether the received pressure exceeds the threshold pressure. The threshold pressure can be a predetermined pressure stored locally in memory included in controller 135.

The threshold pressure can be a pressure range. For example, the pressure range can include an upper threshold pressure and a lower threshold pressure. For instance, operation of power generator 100 may occur optimally at a particular pressure of the anode loop 125, and the particular pressure of the anode loop 125 can fall within the threshold pressure range. That is, the particular pressure of the anode loop 125 can be within the lower threshold pressure and the upper threshold pressure.

In some examples, controller 135 can determine the pressure in anode loop 125 is less than the lower threshold pressure. For example, the lower threshold pressure can be 5 PSI, and the controller 135 can determine the received pressure in the anode loop 125 is 4 PSI. Accordingly, controller 135 can determine the pressure in anode loop 125 is less than the lower threshold pressure.

A drop in pressure in anode loop 125 can, in some examples, correspond to a higher power requirement by the load from charge storage device 130. For example, in response to more power being drawn by the load (e.g., by a UAS), more energy from fuel cell 110 may be needed to meet the demand. As the rate of hydrogen being used by fuel cell 110 increases to generate more energy, the pressure in anode loop 125 can drop, causing the pressure to fall below the lower threshold pressure.

In order to compensate for the rate of hydrogen being utilized by fuel cell 110 from hydrogen generator 115 increasing as a result of the increased load from the UAS, controller 135 can modify the speed of blower 165 to increase the hydrogen generation rate in the hydrogen generator. Controller 135 can modify the speed of blower 165 by increasing the blower speed such that blower 165 can provide more water vapor to the hydrogen generator 115, which increases the hydrogen generation rate. Increasing the speed of blower 165 thus increases the pressure in anode loop 125 (e.g., to within the threshold pressure range as described above). As a result, operational parameters for various components of power generator 100 can be kept to within ideal operational limits.

In some examples, controller 135 can determine the pressure in anode loop 125 exceeds the upper threshold pressure. For example, the upper threshold pressure can be 12 PSI, and the controller 135 can determine the received pressure in the anode loop 125 is 14 PSI. Accordingly, controller 135 can determine the pressure in anode loop 125 has exceeded the upper threshold pressure.

An increase in pressure in anode loop 125 can, in some examples, correspond to a lower power requirement by the load or the charge storage device 130. For example, in response to lower power being used by the load (e.g., by a UAS) or by charge storage device 130, power may be required from fuel cell 110. As the rate of hydrogen being used by fuel cell 110 decreases to generate less power for charge storage device 130, the pressure in anode loop 125 can increase, causing the pressure to increase above the higher threshold pressure.

In order to compensate for the rate of hydrogen being utilized by fuel cell 110 from hydrogen generator 115 decreasing as a result of the decreased load from the UAS or charge storage device 130, controller 135 can modify the speed of blower 165. Controller 135 can modify the speed of blower 165 by decreasing the blower speed such that blower 165 can provide less water vapor to hydrogen generator 115, which decreases the hydrogen generation rate. Decreasing the speed of blower 165 can correspondingly decrease the pressure in anode loop 125 (e.g., to within the threshold pressure range as described above). As a result, operational parameters for various components of power generator 100 can be kept to within ideal operational limits.

Although the lower threshold pressure is described above as being 5 PSI and the upper threshold pressure is described above as being 14 PSI, embodiments of the present disclosure are not so limited. For example, the upper and lower threshold pressures can be any other pressure value. In some examples, the pressure values of the upper and lower threshold pressures can vary based on the load (e.g., the UAS), the type of hydrogen fuel utilized by hydrogen generator 115, among other parameters.

As described above, modifying the speed of blower 165 can affect operating parameters of various components of power generator 100. For example, modifying the speed of blower 165 to modify the pressure in anode loop 125 can maintain an inlet and outlet relative humidity of fuel cell 110 within a predetermined range, maintain an inlet and outlet relative humidity of hydrogen generator 115 within a predetermined range, maintain an inlet and outlet relative humidity of first water exchanger 155 and/or second water exchanger 155 within a predetermined range, and/or a temperature of first water exchanger 155 and/or second water exchanger 155 within a predetermined range, among other operating parameters and/or other operating parameters of other components of power generator 100.

Various sensors can be utilized to monitor components of power generator 100. For example, the various components of power generator 100 can include temperature sensors that can transmit temperatures of hydrogen generator 115, fuel cell 110, and/or first water exchanger 155 and/or second water exchanger 157 to controller 135. In some examples, controller 135 can maintain operating temperatures of the hydrogen generator 115, fuel cell 110, and/or first water exchanger 155 and/or second water exchanger 157 utilizing a fan and/or fans (e.g., operation of the fan/fans can lower the operating temperatures). In some examples, controller 135 can maintain operating temperatures of the hydrogen generator 115, fuel cell 110, and/or first water exchanger 155 and/or second water exchanger 157 utilizing a pump circulating cooling fluid to the components of power generator 100 (e.g., operation of the pump circulating the cooling fluid can lower the operating temperatures).

As described above, in some examples controller 135 can provide inputs to power generator 100 based on a current draw by the load (e.g., a UAS) from charge storage device 130. Controller 135 can receive an amount of current draw from charge storage device 130 coupled to fuel cell 110. As described above, the charge storage device 130 receives electricity generated by fuel cell 110 in response to hydrogen being provided to an anode of fuel cell 110. Hydrogen can be supplied to the anode via blower 165 by way of anode loop 125 and secondary path 128.

The current draw from charge storage device 130 can be by the load in addition to that drawn by controller 135 and the mechanisms controlled by controller 135. For example, a UAS may be drawing current from charge storage device 130 in order to operate. The current draw from charge storage device 130 can be measured by a sensor. For example, a current sensor can measure the current from charge storage device 130 to the load and transmit the current to controller 135.

Controller 135 can determine whether the current draw from charge storage device 130 exceeds a threshold current draw. As an example, the current sensor can determine the current draw from charge storage device 130 to be 50A. Controller 135 can compare the received current draw to a threshold current draw to determine whether the received current draw exceeds the threshold current draw. The threshold current draw can be a predetermined current draw stored locally in memory included in controller 135.

The threshold current draw can be a current draw range. For example, the current draw range can include an upper threshold current draw and a lower threshold current draw.

In some examples, controller 135 can determine the current draw from charge storage device 130 exceeds the upper threshold current draw. For example, the upper threshold current draw can be 55 A, and the controller 135 can determine the current draw from charge storage device 130 is 60A. Accordingly, controller 135 can determine the current draw from charge storage device 130 exceeds the upper threshold current draw. An increase in current draw from charge storage device 130 can indicate the load (e.g., the UAS) is utilizing more power.

In order to compensate for the increase in current draw by the load from charge storage device 130, controller 135 can modify the speed of blowers 165 and 140. Controller 135 can modify the speed of blowers 165 and 140 to provide more hydrogen from hydrogen generator 115 and air from ambient to fuel cell 110 by increasing a blower fan speed of blowers 165 and 140. As a result of more hydrogen and air being provided to fuel cell 110, fuel cell 110 can generate more electricity to provide to charge storage device 130 to compensate for the increase in power by the UAS so the UAS can continue to operate.

In some examples, controller 135 can determine the current draw from charge storage device 130 is less than the lower threshold current draw. For example, the lower threshold current draw can be 35 A. In an example, the controller 135 may determine the current draw from charge storage device 130 is 30 A. Accordingly, controller 135 can determine the current draw from charge storage device 130 (e.g., 30 A) is less than the threshold current draw (e.g., 35 A). The decrease in current draw from charge storage device 130 can indicate the load (e.g., the UAS) is utilizing less power.

In order to compensate for the decrease in current draw by the load from charge storage device 130, controller 135 can modify the speed of blowers 165 and 140. Controller 135 can modify the speed of blowers 165 and 140 to provide less hydrogen from hydrogen generator 115 and air from ambient to fuel cell 110 by reducing a blower fan speed of blowers 165 and 140. As a result of less hydrogen and air being provided to fuel cell 110, fuel cell 110 can generate less electricity to provide to charge storage device 130.

Although the upper threshold current draw is described above as being 55 A and the lower threshold current draw is described above as being 35 A, embodiments of the present disclosure are not so limited. For example, the upper and lower threshold current draws can be any other current values.

The controller 135 may use PID type control algorithms to control the speed of blowers 165 and 140 to maintain the operating parameters of the various components of power generator 100. Other control algorithms may be used in further embodiments, such as modeling and any other type of algorithm sufficient to control the operating parameters of the various components of power generator 100 by controlling the speed of blowers 165 and 140.

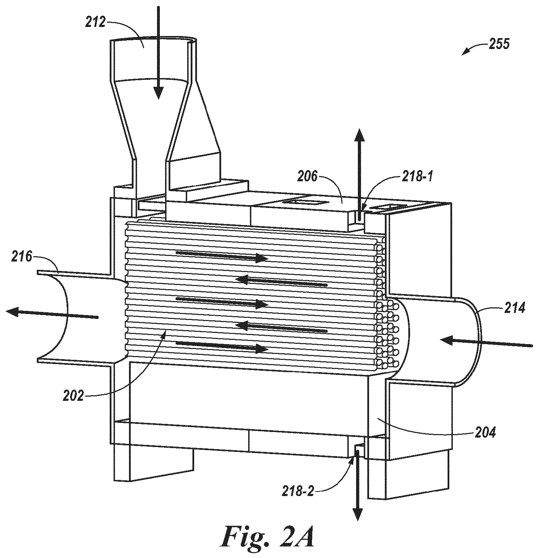

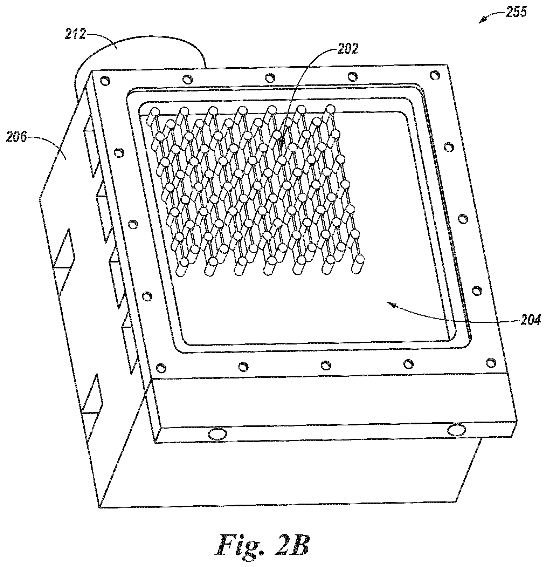

Figures 2A and 2B illustrate various views of a water exchanger 255 for a fuel cell based power generator according to the present disclosure. For example, Fig. 2A illustrates a first angled cross-sectional view of water exchanger 255, and Fig. 2B illustrates a second angled cross-sectional view of water exchanger 255. Water exchanger 255 can be, for example, water exchanger 155 and 157 previously described in connection with Fig. 1.

As shown in Figures 2A and 2B, water exchanger 255 includes a plurality of hollow tubular forming an array of hollow tubular structures 202.

Each respective hollow tubular structure 202 comprises a membrane that is selectively permeable to water vapor over atmospheric gases including oxygen and hydrogen, preferably also nitrogen. The selective membranes may be made from a broad variety of compositions, including (but not limited to) commercially available membranes based on: perfluorosulfonic acid (e.g. Nafion^{®}, Aquivion^{®}, Gore-Select^{®}, etc.); polybenzimidazole (e.g. fumapem^{®} AM); sulfonated polysulfone (e.g. fumapem^{®} SX); sulfonated polyarylene (e.g. Asahi CMV); poly(styrene-co-butadiene) (e.g. Asahi AMV); poly(styrene-co-divinylbenzene) (e.g. NEOSEPTA); silicone (e.g. PermSelect^{®}). The membranes may also be made from a variety of proprietary or experimental chemistries under development for application as cation and anion exchange membranes.. The materials may be formed into reinforced membranes, such as for example W.L. Gore's GORE-SELECT which uses a reinforcing ePTFE (expanded polytetrafluoroethylene) layer to create a thin, strong membrane with higher water permeability and selectivity to other gases.

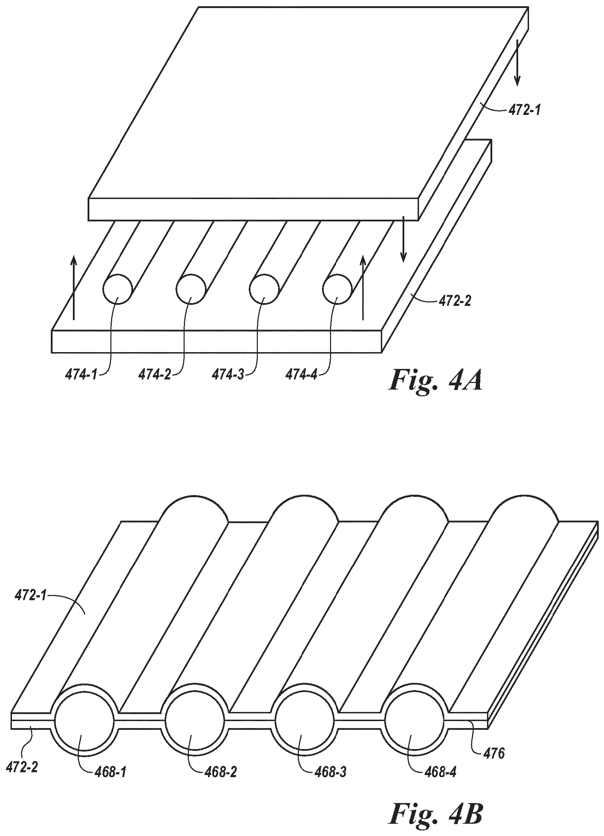

The plurality of hollow tubular structures is produced by forming a plurality of flat sheet structures, each including a membrane material or reinforced membrane material, around a plurality of solid tubular (e.g., cylindrical) structures, as will be further described herein (e.g., in connection with Figures 4A and 4B).

The membrane material is selectively permeable to water. If reinforcement is used, such as a PE material, the reinforcement may be a porous material. As such, the hollow tubular structures 202 can be used to exchange water (e.g., water vapor) between two flowing gas streams (e.g., air and hydrogen) without allowing the two gas streams to mix, as will be further described herein.

The membrane material can be a thin material as compared to the reinforcement material (e.g., the reinforcement material may be much thicker than the membrane material). For instance, the membrane material can have a thickness of 5 micrometers or less, and the reinforcement material, such as PE, can have a thickness of 100 micrometers. Further, the lumen (e.g., inner surface) of each respective hollow tubular structure 202 can be pressurized relative to (e.g. have a higher pressure than) the outer surface of each respective hollow tubular structure 202, thereby causing the hollow tubular structures to inflate when a gas stream (e.g., hydgrogen) flows therethrough.

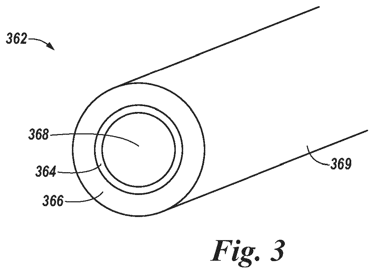

The use of such a tensile membrane can enable an inherently light-weight design for the hollow tubular structures 202, and therefore for water exchanger 255. For example, each respective hollow tubular structure 202 may have a weight per unit area of 2.0-2.5 mg/cm². Further, the design of the array of hollow tubular structures 202 can be used to reduce the pressure drop across the tubular structures while water is being exchanged between the two flowing gas streams. For example, an array having hollow tubular structures 202 with a larger diameter can have a reduced pressure drop on lumen (e.g., inner) side of the tubular structures, and an array having a larger spacing between each respective hollow tubular structure 202 can have a reduced pressure drop on the outside of the tubular structures (e.g., a larger diameter for, and a larger spacing between, the hollow tubular structures results in a smaller pressure drop). An example of a hollow tubular structure 202, and an example method for processing an array of hollow tubular structures 202, will be further described herein (e.g., in connection with Figures 3 and 4A-4B).

In one embodiment, the membrane, including any optional reinforcing material may have an inner tube (lumen) diameter of 0.5mm to 2.0mm. The membrane thickness may be 5um to 50um, and the tube length may be 10cm to 40cm. These measurements are for example only, and reflect a tradeoff between diameter, length, and thickness to achieve desired efficiency in water removal versus pressure required to operate efficiently, with total weight also taken into account. The use of hollow tube structures allows a significant reduction in pressure across the water exchanger enabling the use of lighter, less powerful fans. Other embodiments may deviate from these measurements for different applications.

As shown in Figures 2A and 2B, water exchanger 255 includes a manifold 204 to which the plurality (e.g., array) of hollow tubular structures 202 is coupled (e.g., attached). For instance, the plurality of hollow tubular structures 202 can be sealed to manifold 204 using a potting (e.g., a potting adhesive) material having a thickness of 0.5-2.0 mm. Further, manifold 204 can comprise a light-weight, stiff material, such as, for instance, a carbon fiber material, which can further enable the light-weight design for water exchanger 255.

As shown in Figures 2A and 2B, water exchanger 255 can include a packaging material 206 that encloses (e.g., surrounds) the plurality of hollow tubular structures 202. Packaging material 206 can comprise, for instance, a carbon fiber material, or a biaxially-oriented polyethylene terephthalate (BoPET) material such as a Mylar film. As such, packaging material 206 can provide a thin, light-weight shell for the plurality of hollow tubular structures 202 that further enables the light-weight design for water exchanger 255.

As shown in Fig. 2A, during operation of water exchanger 255 (e.g., as a part of fuel cell based power generator 100 previously described in connection with Fig. 1), water exchanger 255 can receive a stream of hot, dry hydrogen from a hydrogen generator (e.g., hydrogen generator 115 previously described in connection with Fig. 1) via intake opening 214, and water exchanger 255 can receive a stream of hot, wet (e.g. humid) air from a fuel cell (e.g., from the cathode exhaust of fuel cell 110 previously described in connection with Fig. 1) via intake opening 212. For example, water exchanger 255 can receive the hot, dry hydrogen through the lumen of each respective hollow tubular structure 202, and water exchanger 255 can receive the hot, wet air across the outer surface of each respective hollow tubular structure 202, such that the hydrogen flows inside the plurality of hollow tubular structures 202 and the air flows outside the plurality of hollow tubular structures 202, as illustrated in Fig. 2A.

As the hot, dry hydrogen flows through the lumen of each respective hollow tubular structure 202 and the hot, wet air flows across the outer surface of each respective hollow tubular structure 202, water (e.g., water vapor) can be transferred from the wet air to the dry hydrogen through the membrane material of each respective hollow tubular structure 202. For example, the water may be extracted from the wet air and provided to the dry hydrogen through the membrane material of each respective hollow tubular structure 202. Further, the membrane material of each respective hollow tubular structure 202 can keep the hot, wet air and the hot, dry hydrogen separate during the transfer of the water from the air to the hydrogen. As such, the air and hydrogen do not mix while the water is being transferred.

After the water has been transferred from the wet air to the dry hydrogen, hot wet hydrogen is output from the other side of the lumen of each respective hollow tubular structure 202. This hot, wet hydrogen can then be output from water exchanger 255 to the hydrogen generator via output opening 216 of the manifold 204, as illustrated in Fig. 2A. Further, after the water has been transferred from the wet air to the dry hydrogen, hot dry air is output (e.g., exhausted) from water exchanger 255 to ambient via output openings 218-1 and 218-2 of manifold 204, as illustrated in Fig. 2A.

In one embodiment, the hot dry air can be captured from output openings 218-1 and 218-2 and routed to a second water exchanger 157 as shown in Fig. 1. The order of the water exchangers 155 and 157 in Fig. 1 can be reversed (fuel cell cathode exchanger 157 first, and anode loop exchanger 155 second.) In still further embodiments, water exchangers 155 and 157 can be combined into a single water exchanger by segregating the cathode loop and anode loop flows on each of the intakes and outlets utilizing separate sets of tubes.

Fig. 3 illustrates an angled cross-sectional view of a hollow tubular structure 362 of a water exchanger for a fuel cell based power generator according to an embodiment of the present disclosure. Hollow tubular structure 362 can be an example of a hollow tubular structure 202 of water exchanger 255 previously described in connection with Figures 2A-2B. According to the invention, the water exchanger 255 comprises sheets of sealed/laminated together tubes as shown in later figures.

As shown in Fig. 3, hollow tubular structure 362 can include a membrane material (e.g., film) 364, and a reinforcement material 366 on the outer surface of (e.g., around) membrane material 364 that provides reinforcement for membrane material 364. As shown in Fig. 3, and as previously described in connection with Figures 2A-2B, membrane material 364 can be a thin material as compared to reinforcement material 366. Further, hollow tubular structure 362 can have a light-weight design, and the lumen 368 of hollow tubular structure 362 can be pressurized relative to the outer surface 369 of hollow tubular structure 362, as previously described in connection with Figs. 2A-2B.

In some embodiments, the tubular structure does not have a reinforcement material, or may have an interior reinforcement material, where material 364 comprises the reinforcement material. In one example, a three layer laminate of PFSA/porous reinforcement/PFSA may be used. Each layer may be approximately 5um thick.

Membrane material 364 is selectively permeable to water, and the reinforcement material 366 can be a porous material. As such, hollow tubular structure 362 can be used to exchange water (e.g., water vapor) between a stream of wet air flowing across the outer surface 369 of hollow tubular structure 362 and a stream of dry hydrogen flowing through the lumen 368 of hollow tubular structure 362 without allowing the two streams to mix, as previously described in connection with Figures 2A-2B.

Figures 4A and 4B illustrate process steps associated with forming a water exchanger for a fuel cell based power generator according to the present invention. For example, Figures 4A and 4B illustrate angled cross-sectional views of process steps associated with forming a plurality (e.g., array) of hollow tubular structures (e.g., 462-1, 462-2, 462-3, and 462-4) of a water exchanger such as, for instance, the plurality of hollow tubular structures 202 of water exchanger 255 previously described in connection with Figures 2A and 2B.

The plurality of hollow tubular structures is formed by forming a plurality of flat sheet structures around a plurality (e.g., array) of solid rods (e.g., cylindrical) structures. After forming the seals between the tubes (e.g. using a thermal or adhesive), the rods are removed and we are left with an array of hollow membrane tubes. For instance, in the example illustrated in Fig. 2A, first sheet structure 472-1 and a second sheet structure 472-2 were formed around solid rod structures 474-1, 474-2, 474-3, and 474-4. However, embodiments are not limited to a particular number of sheet structures or solid rod structures. For instance, the array of solid rod structures can include any number of rows having any number of solid tubular structures, with flat sheet structures on each respective side (e.g., top and bottom) of each respective row being formed around the solid rod structures of that row in a manner analogous to that illustrated in Fig. 2A.

Each respective flat sheet structure (e.g., 472-1 and 472-2) can include a membrane material and a reinforcement material on the PFSA membrane material. The membrane material of each respective flat sheet structure can be a thin material as compared to the reinforcement material, as previously described in connection with Figures 2A-2B.

The plurality of flat sheet structures (e.g., sheet structures 472-1 and 472-2) can be formed around the plurality of solid rod structures (e.g., rod structures 474-1, 474-2, 474-3, and 474-4) by, for example, forming different respective portions of a first one of the flat sheet structures around a first portion of each respective solid rod structure, and forming different respective portions of a second one of the flat sheet structures around a second portion of each respective solid rod structure. For instance, as illustrated in Figures 2A-2B, a different respective portion of flat sheet structure 472-1 is formed around the top half of each respective solid rod structure 474-1, 474-2, 474-3, and 474-4 (e.g., a first portion of flat sheet structure 472-1 is formed around the top half of rod structure 474-1, a second portion of flat sheet structure 472-1 is formed around the top half of rod structure 474-2, etc.), and a different respective portion of flat sheet structure 472-2 is formed around the bottom half of each respective solid rod structure 474-1, 474-2, 474-3, and 474-4 (e.g., a first portion of flat sheet structure 472-2 is formed around the bottom half of rod structure 474-1, a second portion of flat sheet structure 472-2 is formed around the bottom half of rod structure 474-2, etc.). That is, portions of two different sheet structures are formed around one respective solid rod structure to form one respective hollow tubular structure.

The first and second flat sheet structures can then be sealed together using an adhesive material or thermal bond such that the sheets conform to the array of rods between them. The sheets may be pressed together, vacuum sealed, laminated, heat sealed, adhered via adhesive material, or otherwise bonded together as indicated at 476. Adhesive adds weight, whereas other means of bonding or sealing the sheets together avoid adding weight.

After the flat sheet structures have been sealed together, the solid rod structures are removed, leaving a plurality of hollow tubular structures remaining. For instance, as shown in Figures 4A-4B, solid rods 474-1, 474-2, 474-3, and 474-4 can be removed to form hollow tubular structures 462-1, 462-2, 462-3, and 462-4 having lumens 468-1, 468-2, 468-3, and 468-4, respectively.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A water exchanger (155, 255) for a fuel cell based power generator, comprising:
a plurality of sheets of hollow tubular structures, wherein each respective hollow tubular structure comprises a membrane (364) that is selectively permeable to water vapor over oxygen and hydrogen; and
a manifold (204) coupled to the hollow tubular structures to provide wet air on one side of the membrane and hydrogen on the other side of the membrane wherein the plurality of sheets of hollow tubular structures are each formed by:
forming a portion of a first one (472-1) of a plurality of sheet structures around a first portion of each of a plurality of solid tubular structures (474);
forming a portion of a second one of the plurality of sheet structures (472-2) around a second portion of each of the plurality of solid tubular structures; and
sealing the first one of the plurality of sheet structures to the second one of the plurality of sheet structures, after forming seals between the hollow tubular structures, removing the solid tubular structures (474) to leave an array of hollow membrane tubular structures; and
wherein the inside of each respective hollow tubular structure is pressurized relative to the outer surface of each respective hollow tubular structure, thereby causing the hollow tubular structure to inflate when a gas stream flows therethrough.

2. The water exchanger of claim 1, wherein the manifold comprises a first output opening (216) coupled to output hydrogen and water vapor permeated across the membrane of the hollow tubular structures.

3. The water exchanger of claim 2, wherein the manifold comprises:
a first intake opening (212) positioned to receive dry hydrogen and provide the dry hydrogen to a lumen within each respective hollow tubular structures;
a second intake opening (214) positioned to receive wet air and provide the wet air across an outer surface of each respective hollow tubular structure, wherein water is transferred from the wet air to the dry hydrogen through the membrane of each respective hollow tubular structure and output via the first output opening.

4. The water exchanger of claim 1, wherein:
the membrane comprises a porous reinforcement material with a thickness of less than 50 micrometers; and
the membrane comprises perfluorosulfonic acid (PFSA) and the reinforcement material comprises a polyethylene material on the PFSA membrane.

5. The water exchanger of claim 1, wherein:
the material of the membrane of the hollow tubular structures comprises a laminate of three layers including PFSA, e-PTFE (expanded polytetrafluoroethylene) and PFSA; and
each layer has a thickness of 5 micrometers or less.

6. A fuel cell based power generator (100), comprising:
a fuel cell (110);
a hydrogen generator (115) coupled to provide hydrogen to an anode side of the fuel cell; and
a water exchanger (155, 255) coupled to receive hydrogen and wet air from a cathode side of the fuel cell, wherein:
the water exchanger includes a plurality of sheets of hollow tubular structures, wherein each respective hollow tubular structure comprises a membrane (364) that is selectively permeable to water vapor over oxygen and hydrogen; and
a manifold (204) coupled to the hollow tubular structures to provide the wet air on one side of the membrane and the hydrogen on the other side of the membrane, wherein the plurality of sheets of hollow tubular structures are each formed by:
forming a portion of a first one (472-1) of a plurality of sheet structures around a first portion of each of a plurality of solid tubular structures (474);
forming a portion of a second one of the plurality of sheet structures (472-2) around a second portion of each of the plurality of solid tubular structures; and
sealing the first one of the plurality of sheet structures to the second one of the plurality of sheet structures, after forming seals between the hollow tubular structures, removing the solid tubular structures (474) to leave an array of hollow membrane tubular structures; and
wherein the inside of each respective hollow tubular structure is pressurized relative to the outer surface of each respective hollow tubular structure, thereby causing the hollow tubular structure to inflate when a gas stream flows therethrough.

7. The fuel cell based power generator of claim 6, wherein the water exchanger is configured to:
output wet hydrogen from the respective hollow tubular structures to the hydrogen generator; and
output dry air to ambient.

8. The fuel cell based power generator of claim 6, wherein the material of the membrane of each respective hollow tubular structure is configured to keep the wet air and the dry hydrogen separate during the transfer of the water from the wet air to the dry hydrogen.

9. The fuel cell based power generator of claim 6, wherein:
the water exchanger includes a packaging material (200) that encloses the plurality of hollow tubular structures; and
the packaging material comprises at least one of a biaxially-oriented polyethylene terephthalate (BoPET) material and a carbon fiber material.

10. A method of producing a water exchanger (155, 255) for a fuel cell (110) based power generator, comprising:
forming a plurality of sheets of hollow tubular structures;
wherein each respective sheet of hollow tubular structures includes:
a membrane material (364) that is selectively permeable to water vapor over oxygen and hydrogen; and
a porous reinforcement material (366) supporting the membrane material, wherein forming each of the plurality of sheets of hollow tubular structures comprises:
forming a portion of a first one (472-1) of a plurality of sheet structures around a first portion of each of a plurality of solid tubular structures (474);
forming a portion of a second one of the plurality of sheet structures (472-2) around a second portion of each of the plurality of solid tubular structures; and
sealing the first one of the plurality of sheet structures to the second one of the plurality of sheet structures, after forming seals between the hollow tubular structures, removing the solid tubular structures (474) to leave an array of hollow membrane tubular structures; and
wherein the inside of each respective hollow tubular structure is pressurized relative to the outer surface of each respective hollow tubular structure, thereby causing the hollow tubular structure to inflate when a gas stream flows therethrough, the method further comprising sealing the plurality of hollow tubular structures to a manifold using a potting material, wherein the manifold (204) is coupled to the hollow tubular structures to provide the wet air on one side of the membrane and the hydrogen on the other side of the membrane.

## Patentansprüche

1. Wasseraustauscher (155, 255) für einen Brennstoffzellenbasierten Stromgenerator, umfassend:
Eine Vielzahl von Platten mit hohlen Rohrstrukturen, wobei jede jeweilige hohle Rohrstruktur eine Membran (364) umfasst, die selektiv für Wasserdampf gegenüber Sauerstoff und Wasserstoff durchlässig ist; und
einen Verteiler (204), der mit den hohlen Rohrstrukturen gekoppelt ist, um auf einer Seite der Membran feuchte Luft und auf der anderen Seite der Membran Wasserstoff bereitzustellen, wobei die Vielzahl von Platten mit hohlen Rohrstrukturen jeweils gebildet ist durch:
Bilden eines Abschnitts einer ersten (472-1) aus einer Vielzahl von Plattenstrukturen um einen ersten Abschnitt jeder einer Vielzahl von festen Rohrstrukturen (474);
Bilden eines Abschnitts einer zweiten der Vielzahl von Plattenstrukturen (472-2) um einen zweiten Abschnitt jeder der Vielzahl von festen röhrenförmigen Strukturen; und
Abdichten der ersten der Vielzahl von Plattenstrukturen an der zweiten der Vielzahl von Plattenstrukturen, nachdem Dichtungen zwischen den hohlen Rohrstrukturen gebildet wurden, Entfernen der festen Rohrstrukturen (474), um eine Anordnung von hohlen Membranrohrstrukturen zurückzulassen; und
wobei das Innere jeder entsprechenden hohlen Rohrstruktur relativ zur Außenfläche jeder entsprechenden hohlen Rohrstruktur unter Druck gesetzt wird, wodurch bewirkt wird, dass sich die hohle Rohrstruktur aufbläst, wenn ein Gasstrom hindurchfließt.

2. Wasseraustauscher nach Anspruch **1,** wobei der Verteiler eine erste Auslassöffnung (216) umfasst, die mit dem Auslass von Wasserstoff und Wasserdampf gekoppelt ist, die durch die Membran der hohlen Rohrstrukturen hindurchgedrungen sind.

3. Wasseraustauscher nach Anspruch 2, wobei der Verteiler umfasst:
eine erste Einlassöffnung (212), die so positioniert ist, dass sie trockenen Wasserstoff aufnimmt und den trockenen Wasserstoff für ein Lumen innerhalb jeder entsprechenden hohlen Rohrstruktur bereitstellt;
eine zweite Einlassöffnung (214), die so positioniert ist, dass sie feuchte Luft aufnimmt und die feuchte Luft über eine Außenfläche jeder entsprechenden hohlen Rohrstruktur bereitstellt, wobei Wasser aus der feuchten Luft durch die Membran jeder entsprechenden hohlen Rohrstruktur zum trockenen Wasserstoff übertragen wird und über die erste Auslassöffnung ausgegeben wird.

4. Wasseraustauscher nach Anspruch 1, wobei:
die Membran ein poröses Verstärkungsmaterial mit einer Dicke von weniger als 50 Mikrometern umfasst; und
die Membran Perfluorsulfonsäure (PFSA) umfasst und das Verstärkungsmaterial ein Polyethylenmaterial auf der PFSA-Membran umfasst.

5. Wasseraustauscher nach Anspruch 1, wobei:
das Material der Membran der hohlen Rohrstrukturen ein Laminat aus drei Schichten umfasst, einschließlich PFSA, e-PTFE (expandiertes Polytetrafluorethylen) und PFSA; und
jede Schicht eine Dicke von 5 Mikrometern oder weniger hat.

6. Brennstoffzellenbasierter Stromgenerator (100), umfassend:
eine Brennstoffzelle (110);
einen Wasserstoffgenerator (115), der gekoppelt ist, um Wasserstoff an einer Anodenseite der Brennstoffzelle bereitzustellen; und
einen Wasseraustauscher (155, 255), der gekoppelt ist, um Wasserstoff und feuchte Luft von einer Kathodenseite der Brennstoffzelle aufzunehmen, wobei:
der Wasseraustauscher eine Vielzahl von Platten mit hohlen Rohrstrukturen einschließt, wobei jede entsprechende hohle Rohrstruktur eine Membran (364) umfasst, die selektiv für Wasserdampf gegenüber Sauerstoff und Wasserstoff durchlässig ist; und
einen Verteiler (204), der mit den hohlen Rohrstrukturen gekoppelt ist, um die feuchte Luft auf einer Seite der Membran und den Wasserstoff auf der anderen Seite der Membran bereitzustellen, wobei die Vielzahl von Platten mit hohlen Rohrstrukturen jeweils gebildet sind durch:
Bilden eines Abschnitts einer ersten (472-1) aus einer Vielzahl von Schichtstrukturen um einen ersten Abschnitt jeder von einer Vielzahl von festen Rohrstrukturen (474);
Bilden eines Abschnitts einer zweiten der Vielzahl von Plattenstrukturen (472-2) um einen zweiten Abschnitt jeder der Vielzahl von festen röhrenförmigen Strukturen; und
Abdichten der ersten der Vielzahl von Plattenstrukturen an der zweiten der Vielzahl von Plattenstrukturen, nachdem Dichtungen zwischen den hohlen Rohrstrukturen gebildet wurden, Entfernen der festen Rohrstrukturen (474), um eine Anordnung von hohlen Membranrohrstrukturen zurückzulassen; und
wobei das Innere jeder entsprechenden hohlen Rohrstruktur relativ zur Außenfläche jeder entsprechenden hohlen Rohrstruktur unter Druck gesetzt wird, wodurch bewirkt wird, dass sich die hohle Rohrstruktur aufbläst, wenn ein Gasstrom hindurchfließt.

7. Brennstoffzellenbasierter Stromgenerator nach Anspruch 6, wobei der Wasseraustauscher konfiguriert ist, um:
feuchten Wasserstoff aus den entsprechenden hohlen Rohrstrukturen an den Wasserstoffgenerator abzugeben; und
trockene Luft an die Umgebung abzugeben.

8. Brennstoffzellenbasierter Stromgenerator nach Anspruch 6, wobei das Material der Membran jeder entsprechenden hohlen Rohrstruktur konfiguriert ist, um die feuchte Luft und den trockenen Wasserstoff während der Übertragung des Wassers aus der feuchten Luft zum trockenen Wasserstoff getrennt zu halten.

9. Brennstoffzellenbasierter Stromgenerator nach Anspruch 6, wobei:
der Wasseraustauscher ein Verpackungsmaterial (206) einschließt, das die Vielzahl hohlen Rohrstrukturen umschließt; und
das Verpackungsmaterial mindestens eines von einem biaxial ausgerichteten Polyethylenterephthalat (BoPET)-Material und einem Kohlenstofffasermaterial umfasst.

10. Verfahren zum Produzieren eines Wasseraustauschers (155, 255) für einen Brennstoffzellen (110) basierten Stromgenerator, umfassend:
Bilden einer Vielzahl von Platten aus hohlen Rohrstrukturen;
wobei jede entsprechende Platte aus hohlen Rohrstrukturen einschließt:
ein Membranmaterial (364), das selektiv für Wasserdampf gegenüber Sauerstoff und Wasserstoff durchlässig ist; und
ein poröses Verstärkungsmaterial (366), das das Membranmaterial stützt, wobei das Bilden jeder der Vielzahl der Platten aus hohlen Rohrstrukturen umfasst:
Bilden eines Abschnitts einer ersten (472-1) aus einer Vielzahl von Schichtstrukturen um einen ersten Abschnitt jeder von einer Vielzahl von festen Rohrstrukturen (474);
Bilden eines Abschnitts einer zweiten der Vielzahl von Plattenstrukturen (472-2) um einen zweiten Abschnitt jeder der Vielzahl von festen röhrenförmigen Strukturen; und
Abdichten der ersten der Vielzahl von Plattenstrukturen an der zweiten der Vielzahl von Plattenstrukturen, nachdem Dichtungen zwischen den hohlen Rohrstrukturen gebildet wurden, Entfernen der festen Rohrstrukturen (474), um eine Anordnung von hohlen Membranrohrstrukturen zurückzulassen; und
wobei das Innere jeder entsprechenden hohlen Rohrstruktur in Bezug auf die Außenfläche jeder entsprechenden hohlen Rohrstruktur unter Druck gesetzt wird, wodurch bewirkt wird, dass sich die hohle Rohrstruktur aufbläst, wenn ein Gasstrom hindurchströmt, wobei das Verfahren ferner das Abdichten der Vielzahl hohlen Rohrstrukturen an einem Verteiler mit einem Vergussmaterial umfasst, wobei der Verteiler (204) mit den hohlen Rohrstrukturen gekoppelt ist, um die feuchte Luft auf einer Seite der Membran und den Wasserstoff auf der anderen Seite der Membran bereitzustellen.

## Revendications

1. Échangeur d'eau (155, 255) pour un générateur de puissance basé sur pile à combustible, comprenant :
une pluralité de feuilles de structures tubulaires creuses, dans lequel chaque structure tubulaire creuse respective comprend une membrane (364) qui est sélectivement perméable à la vapeur d'eau par rapport à l'oxygène et l'hydrogène ; et
un collecteur (204) couplé aux structures tubulaires creuses pour fournir de l'air humide sur un côté de la membrane et de l'hydrogène sur l'autre côté de la membrane dans lequel la pluralité de feuilles de structures tubulaires creuses sont chacune formées par :
la formation d'une partie d'une première (472-1) d'une pluralité de structures en feuilles autour d'une première partie de chacune d'une pluralité de structures tubulaires solides (474) ;
la formation d'une partie d'une deuxième de la pluralité de structures en feuilles (472-2) autour d'une deuxième partie de chacune de la pluralité de structures tubulaires solides ; et
le scellage de la première de la pluralité de structures en feuilles à la deuxième de la pluralité de structures en feuilles, après la formation de joints d'étanchéité entre les structures tubulaires creuses, le retrait des structures tubulaires solides (474) pour laisser un réseau de structures tubulaires de membranes creuses ; et
dans lequel l'intérieur de chaque structure tubulaire creuse respective est pressurisé par rapport à la surface externe de chaque structure tubulaire creuse respective, amenant ainsi la structure tubulaire creuse à gonfler lorsqu'un flux gazeux s'écoule à travers elle.

2. Échangeur d'eau selon la revendication 1, dans lequel le collecteur comprend une première ouverture de sortie (216) couplée pour délivrer en sortie de l'hydrogène et de la vapeur d'eau diffusée à travers la membrane des structures tubulaires creuses.

3. Échangeur d'eau selon la revendication 2, dans lequel le collecteur comprend :
une première ouverture d'admission (212) positionnée pour recevoir de l'hydrogène sec et fournir l'hydrogène sec à une lumière à l'intérieur de chaque structure tubulaire creuse respective ;
une deuxième ouverture d'admission (214) positionnée pour recevoir de l'air humide et fournir l'air humide à travers une surface externe de chaque structure tubulaire creuse respective, dans lequel de l'eau est transférée de l'air humide vers l'hydrogène sec à travers la membrane de chaque structure tubulaire creuse respective et délivrée en sortie via la première ouverture de sortie.

4. Échangeur d'eau selon la revendication 1, dans lequel :
la membrane comprend un matériau de renforcement poreux avec une épaisseur inférieure à 50 micromètres ; et
la membrane comprend de l'acide perfluorosulfonique (PFSA) et le matériau de renforcement comprend un matériau de polyéthylène sur la membrane en PFSA.

5. Échangeur d'eau selon la revendication 1, dans lequel :
le matériau de la membrane des structures tubulaires creuses comprend un stratifié de trois couches incluant PFSA, e-PTFE (polytétrafluoroéthylène expansé) et PFSA ; et
chaque couche a une épaisseur de 5 micromètres ou moins.

6. Générateur de puissance (100) basé sur pile à combustible, comprenant :
une pile à combustible (110) ;
un générateur d'hydrogène (115) couplé pour fournir de l'hydrogène à un côté anode de la pile à combustible ; et
un échangeur d'eau (155, 255) couplé pour recevoir de l'hydrogène et de l'air humide à partir d'un côté cathode de la pile à combustible, dans lequel :
l'échangeur d'eau inclut une pluralité de feuilles de structures tubulaires creuses, dans lequel chaque structure tubulaire creuse respective comprend une membrane (364) qui est sélectivement perméable à la vapeur d'eau par rapport à l'oxygène et l'hydrogène ; et
un collecteur (204) couplé aux structures tubulaires creuses pour fournir de l'air humide sur un côté de la membrane et de l'hydrogène sur l'autre côté de la membrane, dans lequel la pluralité de feuilles de structures tubulaires creuses sont chacune formées par :
la formation d'une partie d'une première (472-1) d'une pluralité de structures en feuilles autour d'une première partie de chacune d'une pluralité de structures tubulaires solides (474) ;
la formation d'une partie d'une deuxième de la pluralité de structures en feuilles (472-2) autour d'une deuxième partie de chacune de la pluralité de structures tubulaires solides ; et
le scellage de la première de la pluralité de structures en feuilles à la deuxième de la pluralité de structures en feuilles, après la formation de joints d'étanchéité entre les structures tubulaires creuses, le retrait des structures tubulaires solides (474) pour laisser un réseau de structures tubulaires de membranes creuses ; et
dans lequel l'intérieur de chaque structure tubulaire creuse respective est pressurisé par rapport à la surface externe de chaque structure tubulaire creuse respective, amenant ainsi la structure tubulaire creuse à gonfler lorsqu'un flux gazeux s'écoule à travers elle.

7. Générateur de puissance basé sur pile à combustible selon la revendication 6, dans lequel l'échangeur d'eau est configuré pour :
délivrer en sortie de l'hydrogène humide des structures tubulaires creuses respectives vers le générateur d'hydrogène ; et
délivrer de l'air sec au milieu ambiant.

8. Générateur de puissance basé sur pile à combustible selon la revendication 6, dans lequel le matériau de la membrane de chaque structure tubulaire creuse respective est configuré pour maintenir séparés l'air humide et l'hydrogène sec pendant le transfert de l'eau de l'air humide vers l'hydrogène sec.

9. Générateur de puissance basé sur pile à combustible selon la revendication 6, dans lequel :
l'échangeur d'eau inclut un matériau d'emballage (206) qui renferme la pluralité de structures tubulaires creuses ; et
le matériau d'emballage comprend au moins l'un d'un matériau de polyéthylène téréphtalate orienté bi-axialement (BoPET) et d'un matériau de fibres de carbone.

10. Procédé de production d'un échangeur d'eau (155, 255) pour un générateur de puissance basé sur pile à combustible (110), comprenant :
la formation d'une pluralité de feuilles de structures tubulaires creuses ;
dans lequel chaque feuille respective de structures tubulaires creuses inclut :
un matériau de membrane (364) qui est sélectivement perméable à la vapeur d'eau par rapport à l'oxygène et l'hydrogène ; et
un matériau de renforcement poreux (366) supportant le matériau de membrane, dans lequel la formation de chacune de la pluralité de feuilles de structures tubulaires creuses comprend :
la formation d'une partie d'une première (472-1) d'une pluralité de structures en feuilles autour d'une première partie de chacune d'une pluralité de structures tubulaires solides (474) ;
la formation d'une partie d'une deuxième de la pluralité de structures en feuilles (472-2) autour d'une deuxième partie de chacune de la pluralité de structures tubulaires solides ; et
le scellage de la première de la pluralité de structures en feuilles à la deuxième de la pluralité de structures en feuilles, après la formation de joints d'étanchéité entre les structures tubulaires creuses, le retrait des structures tubulaires solides (474) pour laisser un réseau de structures tubulaires de membranes creuses ; et
dans lequel l'intérieur de chaque structure tubulaire creuse respective est pressurisé par rapport à la surface externe de chaque structure tubulaire creuse respective, amenant ainsi la structure tubulaire creuse à gonfler lorsqu'un flux gazeux s'écoule à travers elle, le procédé comprenant en outre le scellement de la pluralité de structures tubulaires creuses à un collecteur en utilisant un matériau d'enrobage, dans lequel le collecteur (204) est couplé aux structures tubulaires creuses pour fournir l'air humide sur un côté de la membrane et l'hydrogène sur l'autre côté de la membrane.
